# EUROPÄISCHE PATENTANMELDUNG

(11) **EP 0 719 854 A2**
(43) Veröffentlichungstag der Anmeldung: **03.07.1996**
(21) Anmeldenummer: 95120695.2
(22) Anmeldetag: 28.12.1995
(51) Int. Cl.: C11B 3/00, B01D 11/04

(54) **Verfahren zur Fraktionierung bzw. Raffination von lipiden Naturstoffen**

(30) Priorität: 29.12.1994 DE 4447116
(71) Anmelder: SKW Trostberg Aktiengesellschaft, D-83308 Trostberg (DE)
(72) Erfinder: Heidlas, Jürgen, Dr., D-83308 Trostberg (DE); Huber, Georg, D-83352 Altenmarkt (DE)
(74) Vertreter: Huber, Bernhard, Dipl.-Chem.

(57) **Zusammenfassung**

Zur Fraktionierung oder/und Raffination von lipiden Naturstoffen durch Extraktion mit verdichteten Gasen setzt man die Naturstoffe flüssig ein und extrahiert sie mit einer flüssigen Mischung von 50 bis 90 Gew.-% Propan und 10 bis 50 Gew.-% Kohlendioxid, die sich im unterkritischen Zustand befindet.

## Beschreibung

Die Erfindung betrifft ein Verfahren zur Fraktionierung bzw. Raffination von lipiden Naturstoffen, wie z. B. Fetten und Ölen, durch Flüssig/Flüssig-Extraktion mit einer Mischung aus den beiden verdichteten Gasen Propan und Kohlendioxid.

Bei der technischen Gewinnung von Ölen und Fetten aus pflanzlichen, tierischen oder mikrobiellen Naturstoffen, sei es extraktiv unter Verwendung von Lösemitteln oder mechanisch mittels Pressung, muß in der Regel eine Reinigung des Rohproduktes erfolgen, um eine ausreichende Qualität erzielen zu können. Hierbei werden üblicherweise im Rahmen der sogenannten Raffination verschiedene Verfahrensschritte zur Abtrennung unerwünschter Begleitstoffe, wie z. B. Phospholipide (Entschleimung) oder Farbstoffe (Bleichung), durchgeführt.

Neben diesen konventionellen Arbeitsweisen wurden seit längerer Zeit Verfahren beschrieben, die verdichtete Gase zur Raffination von Ölen und Fetten einsetzen (US 2,660,590 und 2,548,434). Entsprechend den dort publizierten Verfahren wurde das reverse Löseverhalten von verdichtetem Propan in der Nähe der kritischen Zustandsdaten (Tc = 96°C, Pc = 42 bar) ausgenutzt, um Öle zu raffinieren, d. h. insbesondere um Phospholipide und Farbstoffe abzutrennen.

Das gleiche Prinzip liegt dem Verfahren gemäß DE-PS 10 69 629 zugrunde, um eine Fraktionierung von ölartigen Gemischen höhermolekularer organischer Verbindungen zu erreichen. In der DE-OS 42 22 153 wurde verdichtetes Propan unter ähnlichen Zustandsbedingungen auch für die Entölung von ölhaltigen Phospholipiden vorgeschlagen.

Trotz der relativ günstigen Verfahrensdrücke und der vergleichsweise hohen Gasbeladung besitzen diese Verfahren generell den Nachteil, daß sie insbesondere bei den relativ niedrigen Gehalten der abzutrennenden Stoffe, wie z. B. Phospholipide und Farbstoffe in den Ausgangsnaturstoffen, relativ hohe Verfahrenstemperaturen benötigen, um das gewünschte Extraktionsziel zu erreichen. Außerdem ist die Selektivität von Propan nahe am kritischen Bereich in vielen Fällen zu gering, um befriedigende Ergebnisse zu erhalten.

Im Gegensatz zum Propan zeigt überkritisches Kohlendioxid generell eine sehr hohe Selektivität und wurde schon vielfach für die Raffination von Ölen und Fetten vorgeschlagen (vgl. bspw. Stahl, E., Quirin, K.-W., Gerard, D. Verdichtete Gase zur Extraktion und Raffination, Springer Verlag, Berlin, 1988). Das entscheidende Problem beim Einsatz von überkritischem Kohlendioxid liegt jedoch in der Tatsache, daß es erst bei relativ hohen Verfahrensdrücken ein Lösevermögen für lipide Stoffe besitzt und dadurch die Wirtschaftlichkeit der entsprechenden Verfahren in den meisten Fällen unbefriedigend ist.

Um die Nachteile von reinem überkritischem Kohlendioxid bzw. verdichtetem Propan zu umgehen, wurde bereits auch schon für die Entölung von Rohlecithin in der DE-OS 34 11 755 vorgeschlagen, eine Mischung aus überkritischem Kohlendioxid mit einem unterkritischen Schleppmittel, insbesondere Propan, einzusetzen. Jedoch liegen auch bei dieser Verfahrensvariante die Drücke noch verhältnismäßig hoch, nämlich zwischen 50 und 300 bar, vorzugsweise zwischen 80 und 200 bar.

Schließlich ist aus den beiden deutschen Offenlegungsschriften DE 43 16 620 sowie DE 43 16 621 bekannt, die Isolierung von Squalen aus Olivenöl-Rückständen bzw. die Konservierung von Extrakten aus Früchten der Sägezahnpalme mittels Kohlendioxid, evtl. aber auch mit Kohlendioxid/Propan-Mischungen durchzuführen. Bei beiden Verfahren wird eine Flüssig/Flüssig-Extraktion in einer Kolonne mit einem solchen Temperaturgradienten durchgeführt, daß das Extraktionsgas im Sumpf unterund im Kolonnenkopf überkritisch vorliegt, damit eine wirksame Trennung erfolgt. Der notwendige Verfahrensdruck liegt zwischen 40 und 350 bar, vorzugsweise zwischen 90 und 160 bar. Als bevorzugte Verfahrenstemperaturen werden 20 bis 80°C angegeben. Ganz offensichtlich ist bei diesen Verfahren die Nähe am kritischen Zustand des Extraktionsgases Voraussetzung dafür, daß eine effiziente Stofftrennung erfolgen kann. Damit sind die Verfahrensdrücke aber immer noch deutlich höher als bei der Extraktion mit unterkritischem Propan, die in der Regel mit Drücken < 40 bar durchgeführt werden kann.

Der Erfindung liegt daher die Aufgabe zugrunde, ein Verfahren zur Fraktionierung oder/und Raffination von lipiden Naturstoffen durch Flüssig/Flüssig-Extraktion mit verdichteten Gasen zu schaffen, welches die genannten Nachteile des Standes der Technik nicht aufweist, sondern eine effektive Fraktionierung bzw. Raffination der Naturstoffe unter relativ niedrigen Verfahrensdrücken und unter schonenden Verfahrenstemperaturen ermöglicht, so daß auch die Wirtschaftlichkeit der Prozeßbedingungen erheblich verbessert wird.

Diese Aufgabe wird erfindungsgemäß dadurch gelöst, daß man die lipiden Naturstoffe in flüssigem Zustand mit einer Mischung bestehend aus 50 bis 90 Gew.-% Propan und 10 bis 50 Gew.-% Kohlendioxid im unterkritischen Zustand der Gasmischung extrahiert. Es hat sich nämlich überraschenderweise gezeigt, daß auch bei relativ schonenden Verfahrensbedingungen bezüglich Druck und Temperatur eine hohe Gasbeladung und damit eine gute Raum/Zeit-Ausbeute und gleichzeitig eine effektive Abtrennung von unerwünschten Begleitstoffen aus dem lipiden Ausgangsmaterial möglich ist.

Beim Verfahren der Erfindung wird das lipide Ausgangsmaterial, vorzugsweise Öle oder Fette, in flüssigem oder verflüssigtem Zustand extrahiert, wobei als Lösemittel eine verdichtete Gasmischung bestehend aus 50 bis 90 Gew.-% Propan und 10 bis 50 Gew.-% Kohlendioxid eingesetzt wird. Es ist erfindungswesentlich, daß die Gasmischung sich hierbei im unterkritischen Zustand sowohl hinsichtlich Druck als auch Temperatur befindet.

Auf diese Weise ist es in wirtschaftlich sinnvoller Weise möglich, die Selektivität im Vergleich zu verdichtetem Propan allein entscheidend zu verbessern. Die Extraktionsbedingungen können hinsichtlich Druck und Temperatur können hierbei in weiten Grenzen variiert werden. Vorzugsweise liegen der Extraktionsdruck zwischen 20 und 65 bar und die Extraktionstemperatur zwischen 10 und 80°C. Wird gemäß einer bevorzugten Ausführungsform mit einem Propananteil von 60 bis 80 Gew.-% und einem Kohlendioxidanteil von 20 bis 40 Gew.-% gearbeitet, so liegt der bevorzugte Druckbereich zwischen 30 und 55 bar und der bevorzugte Temperaturbereich zwischen 30 und 65°C.

Erfindungsgemäß kann man im Vergleich zur Extraktion mit Propan allein bei sehr viel schonenderen Temperaturen arbeiten, da die Selektivität des Extraktionsmediums nicht mehr durch das reverse Löseverhalten von Propan in der Nähe der kritischen Temperatur von 96°C, sondern durch den Anteil an flüssigem Kohlendioxid bestimmt wird. Im Vergleich zur Extraktion mit überkritischem Kohlendioxid wird das erfindungsgemäße Verfahren bei deutlich niedrigeren Verfahrensdrücken durchgeführt, ohne daß im Hinblick auf die Selektivität irgendwelche Abstriche gemacht werden müssen.

Die zur Erzielung einer ausreichenden Gasbeladung benötigte Gasmenge kann in relativ weiten Grenzen variiert werden und hängt im wesentlichen vom Ausgangsmaterial, der Gaszusammensetzung und dem Extraktionsziel ab. Die bevorzugten Gasmengen liegen zwischen 1 und 25 g des Propan/Kohlendioxid-Gemisches pro g des zu behandelnden Ausgangsmaterials.

Ein besonderer Vorteil des erfindungsgemäßen Verfahrens besteht weiter darin, daß man nicht nur Druck und Temperatur, sondern darüber hinaus auch noch die Gaszusammensetzung des Extraktionsmediums variieren kann, so daß man durch entsprechende Wahl dieser drei Variablen optimale Bedingungen für die jeweilige Extraktion einstellen kann. Hierbei ist zu beachten, daß mit abnehmender Kohlendioxidkonzentration die für die Selektivität benötigte Temperatur der Gasmischung ansteigt. Daher ist bei einer relativ geringen Kohlendioxidkonzentration oftmals eine höhere Verfahrenstemperatur zur Erreichung einer bestimmten Selektivität erforderlich als bei einer höheren Kohlendioxidkonzentration. Die Selektivitätseigenschaften verändern sich bei niedriger Kohlendioxidkonzentration (< 20 Gew.-%) wie bei verdichtetem Propan: Mit steigender Temperatur vermindert sich das Lösevermögen und es erhöht sich die Selektivität. Im Gegensatz dazu ist bei einer höheren Kohlendioxidkonzentration (mehr als 20 bis 50 Gew.-%) eine höhere Verfahrenstemperatur zur Verbesserung der Selektivität nicht mehr notwendig, und es kann zwischen 30 und 65°C gearbeitet werden.

Gemäß einer bevorzugten Ausführungsform wird die Flüssig/Flüssig-Extraktion in einer Gegenstromextraktionskolonne durchgeführt. Wird in einer solchen Kolonne noch ein Temperaturgradient aufgebaut, so läßt sich die Trennschärfe des Extraktionsmediums zusätzlich verbessern.

Bei dieser besonders bevorzugten Ausführungsform wird im Kolonnensumpf eine niedrigere Temperatur gewählt als im Kolonnenkopf. Der Temperaturgradient kann bis zu 20°C betragen, wobei jedoch auch im Kopf der Kolonne die Zustandsbedingungen immer unterkritisch sein müssen.

Im Anschluß an die Extraktion in einer Kolonne wird das Sumpfprodukt, das noch Produkt und parameterspezifisch Anteile an Extraktionsgas enthält, aus dem Kolonnensumpf mit Hilfe geeigneter Vorrichtungen entnommen. Das Extraktionsgasgemisch wird dabei vorzugsweise zurückgewonnen. Das Kopfprodukt, welches deutlich mehr Extraktionsgase enthält als das Sumpfprodukt, wird zur Isolierung zweckmäßig einem Extraktabscheider zugeführt, in dem durch Temperaturerhöhung und/oder Druckabsenkung das flüssige Gas verdampft wird. Die bevorzugte Abscheidetemperatur liegt hierbei bei weniger als 60°C und der bevorzugte Abscheidedruck zwischen 8 und 30 bar.

Während der Abscheidung fallen aus dem gasförmigen Extraktionsmittel die Extrakte des Kopfproduktes aus, wobei anschließend das unbeladene Gasgemisch wieder zurückgewonnen und zur Erhöhung der Wirtschaftlichkeit erneut der Extraktion zugeführt werden kann, so daß das Extraktionsmittel im Kreis geführt wird.

Das erfindungsgemäße Verfahren, welches vorzugsweise kontinuierlich durchgeführt wird, ist für ein breites Anwendungsspektrum im Bereich der pflanzlichen, tierischen und mikrobiellen Lipide geeignet. Neben Phospholipiden (Lecithinen) können auch Farbstoffe, wie z. B. β-Carotin, aus einer Öl- oder verflüssigten Fettphase abgetrennt werden. Des weiteren können Mono- und Diglyceride isoliert werden, wobei die jeweils polareren Komponenten als Sumpfprodukt einer Kolonnenfraktionierung anfallen. Außerdem gestattet das erfindungsgemäße Verfahren sogar eine Fraktionierung von Triglyceriden. Hierbei fallen die stärker ungesättigten Glyceride im Sumpfprodukt der Kolonnenfraktionierung an.

Besondere Vorteile des erfindungsgemäßen Verfahrens sind niedrige Verfahrensdrücke und -temperaturen sowie eine hohe Gasbeladung, womit gute Raum/Zeit-Ausbeuten und besondere Wirtschaftlichkeit des Verfahrens verbunden sind. Außerdem zeichnet sich das erfindunsgemäße Verfahren durch eine besonders hohe Selektivität, d. h. weitgehende Abtrennung von unerwünschten Begleitstoffen wie Phospholipide oder Farbstoffe, sowie gute Fraktionierung von Partialglyceriden (Mono- oder Diglyceriden) aus.

Die nachfolgenden Beispiele sollen das erfindungsgemäße Verfahren näher veranschaulichen.

### Beispiele

### Beispiel 1

### Entschleimung von rohem Sojaöl

Durch eine Hochdruck-Extraktionskolonne (Leerrohrvolumen 2 l) wird von unten nach oben ein bei 35 bar Verfahrensdruck verflüssigtes Gasgemisch bestehend aus 75 Gew.-% Propan und 25 Gew.-% Kohlendioxid mit einem Massenfluß von 2,5 kg/h geführt. Die Kolonne ist über eine geeignete Heizung mit einem Temperaturgradienten von 15°C temperiert. Am Kolonnensumpf ist die Temperatur auf 35°C und am Kolonnenkopf auf 50°C eingestellt. Ungefähr im mittleren Teil der Kolonne wird rohes Sojaöl (Hexan-extrahiert) mit einem Phosphorgehalt von 450 ppm mit einem Massenfluß von 300 g/h im Gegenstrom eingespeist. Das Sojaöl löst sich unter diesen Bedingungen und wird mit dem Fluß des verdichteten Gases aus dem Kopf der Kolonne geführt. Die Phospholipide (Lecithine) werden nicht gelöst und fallen als fein verteilte Tröpfchen gegen den Strom des verdichteten Gases in den Kolonnensumpf, aus dem sie durch eine geeignete Vorrichtung als trockenes Pulver ausgetragen werden können. Das Kopfprodukt wird einem Extraktabscheider zugeführt, in dem durch eine Druckabsenkung auf 15 bar bei einer Temperatur von 45°C das Extraktionsmedium in den gasförmigen Zustand überführt wird, wobei das entschleimte Sojaöl ausfällt. Das gasförmige Extraktionsgas wird anschließend über einen Kondensator wieder verflüssigt, in einen Pufferbehälter geführt, dort wieder auf das definierte Mischungsverhältnis eingestellt und erneut als Medium für die Fraktionierung eingesetzt.

Die Analyse des Kopfproduktes ergibt einen Phosphorgehalt < 5 ppm. Der Ölgehalt im Sumpfprodukt ist < 5 Gew.-% (bestimmt als acetonlösliche Anteile).

### Beispiel 2

### Fraktionierung von β-carotinhaltigen Ölen

In einer Hochdruck-Anlage mit Kolonne analog Beispiel 1 wird mit einem Gasgemisch bestehend aus 60 Gew.-% Propan und 40 Gew.-% Kohlendioxid bei einem Druck von 55 bar und einem Massenfluß von 2 kg/h gearbeitet. Die Kolonne ist in einem Temperaturgradienten temperiert. Im Kolonnenkopf beträgt die Temperatur 60°C, im Kolonnensumpf 40°C. In der Mitte wird ein mikrobielles Öl mit einem β-Carotingehalt von 10 000 ppm (1 %) bei einem Massenfluß von 200 g/h eingespeist. Das β-Carotin zeigt unter diesen Bedingungen eine schlechtere Löslichkeit als das dazugehörige Öl und reichert sich deshalb im Kolonnensumpf an. Aus dem Kolonnensumpf kann eine Ölphase abgezogen werden, in der β-Carotin auf 10 % angereichert ist. Das β-Carotin-angereicherte Kopfprodukt enthält < 500 ppm β-Carotin und wird, wie in Beispiel 1 beschrieben, in einem Extraktabscheider bei 15 bar und 45°C abgetrennt. Aus dem angereicherten β-Carotin im Sumpf kann durch Umkristallisation reines β-Carotin gewonnen werden.

## Patentansprüche

1. Verfahren zur Fraktionierung oder/und Raffination von lipiden Naturstoffen durch Extraktion mit verdichteten Gasen,
**dadurch gekennzeichnet**,
daß man die Naturstoffe flüssig einsetzt und mit einer flüssigen Mischung von 50 bis 90 Gew.-% Propan und 10 bis 50 Gew.-% Kohlendioxid, die sich im unterkritischen Zustand befindet, extrahiert.

2. Verfahren nach Anspruch 1,
**dadurch gekennzeichnet**,
daß man die Extraktion bei einem Druck zwischen 20 und 65 bar und einer Temperatur zwischen 10 und 80°C durchführt.

3. Verfahren nach den Ansprüchen 1 oder 2,
**dadurch gekennzeichnet**,
daß man eine Gasmischung aus 60 bis 80 Gew.-% Propan und 20 bis 40 Gew.-% Kohlendioxid verwendet.

4. Verfahren nach einem der Ansprüche 1 bis 3,
**dadurch gekennzeichnet**,
daß man die Extraktion bei einem Druck zwischen 30 und 55 bar und einer Temperatur zwischen 30 und 65°C durchführt.

5. Verfahren nach einem der Ansprüche 1 bis 4,
**dadurch gekennzeichnet**,
daß man pro g zu extrahierendes lipides Ausgangsmaterial 1 bis 25 g des Propan-Kohlendioxid-Gemisches verwendet.

6. Verfahren nach einem der Ansprüche 1 bis 5,
**dadurch gekennzeichnet**,
daß man die Extraktion in einer Hochdruckextraktionskolonne im Gegenstrom durchführt.

7. Verfahren nach Anspruch 6,
**dadurch gekennzeichnet**,
daß man in der Extraktionskolonne einen Temperaturgradienten von bis zu 20°C aufbaut.

8. Verfahren nach einem der vorhergehenden Ansprüche,
**dadurch gekennzeichnet**,
daß man die extrahierten lipiden Bestandteile durch Temperaturerhöhung und/oder Druckabsenkung von den Extraktionsgasen abtrennt.

9. Verfahren nach Anspruch 8,
**dadurch gekennzeichnet**,
daß die Abscheidetemperatur < 60°C beträgt und der Abscheidedruck zwischen 8 und 30 bar liegt.

10. Verfahren nach einem der vorhergehenden Ansprüche,
**dadurch gekennzeichnet**,
daß man die Flüssig/Flüssig-Extraktion kontinuierlich durchführt.

11. Verfahren nach einem der vorhergehenden Ansprüche,
**dadurch gekennzeichnet**, daß man das Extraktionsgasgemisch nach Abtrennung der extrahierten Bestandteile wieder zur erneuten Extraktion rezyklisiert.
